# EUROPÄISCHE PATENTANMELDUNG

(11) **EP 3 211 389 A1**
(43) Veröffentlichungstag der Anmeldung: **30.08.2017**
(21) Anmeldenummer: 16157809.1
(22) Anmeldetag: 29.02.2016
(51) Int. Cl.: G01J 3/02, G01J 3/10, G01J 3/42, G01J 3/433

(54) **IN-SITU-LASERSPEKTROMETER**

(71) Anmelder: Siemens Aktiengesellschaft, 80333 München (DE)
(72) Erfinder: Bitter, Ralf, 76139 Karlsruhe (DE); Depenheuer, Daniel, 67365 Schwegenheim (DE)

(57) **Zusammenfassung**

Bei einem In-situ-Laserspektrometer sind zwei Messköpfe an gegenüberliegenden Stellen eines ein zu analysierendes Prozessgas (2) führenden Anlagenteils montiert. Der eine Messkopf enthält eine Laserdiode (4) und eine Kollimatorlinse (14), der andere Messkopf einen Detektor (5) mit nachgeordneter Auswerteinrichtung (8). Das von der Kollimatorlinse (14) zu einem Lichtbündel (15) geformte Licht (3) der Laserdiode (4) wird nach Durchstrahlen des Anlagenteils und anschließender Detektion hinsichtlich seiner Absorption in dem Prozessgas (2) zu einem Analysenergebnis (33) ausgewertet.

Um die Inbetriebnahme des Laserspektrometers zu vereinfachen, während des Messbetriebs auftretende mechanische Dejustierungen zu kompensieren und die Intensität des erzeugten Lichts (3) für die Detektion optimal auszunutzen, ist ein dreidimensional wirkender Positionierantrieb (35) vorgesehen, der in Abhängigkeit von einem von der Auswerteeinrichtung (8) erzeugten und von der detektierten Lichtintensität abhängigen Signal (36) die Laserdiode (4) und Kollimatorlinse (14) durch Änderung ihres Abstandes und durch relative Verschiebung von Laserdiode (4) und Kollimatorlinse (14) oder Kippen der Kollimatorlinse (14) relativ zueinander positioniert.

## Beschreibung

Die Erfindung betrifft ein In-situ-Laserspektrometer zur Analyse eines in einem Anlagenteil geführten Prozessgases, mit zwei Messköpfen zur Montage an gegenüberliegenden Stellen des Anlagenteils, wobei der eine Messkopf eine Laserdiode und eine Kollimatorlinse enthält, die das divergente Licht der Laserdiode zu einem Lichtbündel formt, um damit das Anlagenteil zu durchstrahlen, und der andere Messkopf einen Detektor enthält, der das Licht detektiert und dem eine Auswerteinrichtung nachgeordnet ist, die das detektierte Licht hinsichtlich der Absorption in dem Prozessgas zu einem Analysenergebnis auswertet.

Ein derartiges Laserspektrometer für eine in-situ Prozessgasanalyse ist aus Fig. 1 der DE 10 2011 082 466 B3 bekannt.

In dieser DE 10 2011 082 466 B3 wird vorgeschlagen, zur Unterdrückung von Interferenzmustern aufgrund von Mehrfachreflexionen des Lichts zwischen parallelen Oberflächen von optischen Bauelementen, wie z. B. Linsen oder Fenstern, im Lichtweg zwischen der Laserdiode und dem Detektor einen MEMS-Spiegel vorzusehen, der das Licht der Laserdiode auf die Kollimatorlinse lenkt und von einer Steuereinrichtung zu oszillierenden Kippbewegungen angeregt wird, so dass das von dem MEMS-Spiegel reflektierte Licht auf unterschiedliche Bereiche der Kollimatorlinse trifft.

Zu demselben Zwecke ist es aus der EP 1 927 831 A1, EP 2 136 190 A1 oder EP 2 336 738 A1 bekannt, die optische Pfadlänge zwischen der Laserdiode und z. B. der Kollimatorlinse mittels eines eindimensional wirkenden Schwingungs- oder Vibrationsantriebs zu variieren. Der Antrieb wirkt unmittelbar auf die Laserdiode oder die Kollimatorlinse.

Bei einem In-situ-Laserspektrometer mit zwei Messköpfen, die die an diametral gegenüberliegenden Stellen eines Anlagenteils wie z. B. eines Ofens, einer Abgasleitung oder eines Kamins montiert sind, besteht eine Herausforderung darin, das von der Kollimatorlinse erzeugte parallele Lichtbündel auf den Detektor auszurichten. Die Messköpfe mit der Laserdiode und dem Detektor werden typischerweise jeweils mit justierbaren Flanschen bzw. unter Verwendung spezieller Ausrichtungsflansche an den Außenwänden des Anlagenteils befestigt. Die Ausrichtung oder Justage der Flansche erfolgt von beiden Seiten aus manuell mit Hilfe einer zusätzlichen Lichtquelle und eines Zielwerkzeugs. Wenn Flanschrohre an dem Anlagenteil festgeschweißt sind, darf ihre Abweichung vom theoretischen optischen Weg nicht mehr als etwa ±2° betragen, weil die Ausrichtungsflansche nicht mehr als ±2° angepasst werden können.

Insbesondere bei längeren Messstrecken ist die Ausrichtung der Messköpfe kritisch. So führt beispielsweise bei einem Abstand der Messköpfe von 25 m bereits eine Winkelabweichung von nur 0,5° zu einem Versatz des Lichtbündels im Bereich des Detektors von 22 cm. In manchen Anwendungsfällen können sich beispielsweise die Ofenwände aufgrund von Temperaturschwankungen bewegen, was zu einer fehlerhaften Ausrichtung von Laserdiode und Detektor und damit zu einer Unterbrechung der Messung führen kann. Es besteht zwar die Möglichkeit, während des langsamen Hochfahrens des Prozesses in dem Ofen das Laserspektrometer mit zu justieren, jedoch ist dies nur in eingeschränktem Maße möglich und erfordert die Anwesenheit eines Technikers im richtigen Moment. Es ist auch möglich, das Lichtbündel leicht divergent auszulegen, jedoch geht dann bei längeren Messstrecken viel nutzbare Lichtintensität verloren oder es wird auf der Detektorseite eine wesentlich größere Optik benötigt, um den vergrößerten Querschnitt des Lichtbündels auf den Detektor zu fokussieren. In beiden Fällen würde sich das Verhältnis von detektierter Nutzstrahlung der Laserdiode und detektierter Störstrahlung aus dem Verbrennungsprozess verschlechtern.

Der Erfindung liegt daher die Aufgabe zugrunde, die Inbetriebnahme von In-situ-Laserspektrometern zu vereinfachen und somit Kosten zu sparen, während des Messbetriebs auftretende mechanische Dejustierungen zu kompensieren und die Intensität des erzeugten Lichts für die Detektion optimal auszunutzen.

Gemäß der Erfindung wird die Aufgabe dadurch gelöst, dass bei dem In-situ-Laserspektrometer der eingangs angegebenen Art der eine Messkopf einen dreidimensional wirkenden Positionierantrieb enthält, der zur relativen gegenseitigen Positionierung von Laserdiode und Kollimatorlinse durch Änderung ihres Abstandes und durch relative Verschiebung von Laserdiode und Kollimatorlinse rechtwinklig zur optischen Achse oder Kippen der Kollimatorlinse ausgebildet ist, und dass eine Steuereinrichtung vorhanden ist, die den Positionierantrieb in Abhängigkeit von einem von der Auswerteeinrichtung erzeugten und von der detektierten Lichtintensität abhängigen Signal steuert.

Durch die Änderung des Abstandes zwischen Laserdiode und Kollimatorlinse kann das Lichtbündel aufgeweitet oder fokussiert werden, während durch das Verschieben von Laserdiode und Kollimatorlinse oder das Kippen der Kollimatorlinse die Richtung des Lichtbündels variiert werden kann. Beides erfolgt gesteuert in Abhängigkeit von der in dem gegenüberliegenden Messkopf detektierten Lichtintensität, so dass eine optimale Ausrichtung des Lichtbündels auf den Detektor möglich ist.

Der Positionierantrieb kann wahlweise derart ausgebildet sein, dass er entweder nur auf die Laserdiode, nur auf die Kollimatorlinse oder auf beide wirkt. Im letztgenannten Fall ist der Positionierantrieb zweigeteilt, wobei zum Beispiel das eine Antriebsteil die Laserdiode in Richtung auf die Kollimatorlinse zu oder von dieser weg verschiebt und das andere Antriebsteil die Kollimatorlinse in zwei zueinander senkrechten Kippebenen verschwenkt.

Eine konstruktiv und baulich einfache und kompakte Lösung wird dadurch erreicht, dass der Positionierantrieb auf die Laserdiode wirkt und diese in drei orthogonale Richtungsachsen positioniert, wobei eine der Richtungsachsen mit der optischen Achse der Kollimatorlinse zusammenfällt. Dabei ist in der Regel auch die zu bewegende Masse geringer als im Falle der Kollimatorlinse.

Der Positionierantrieb ist vorzugsweise als MEMS- (Micro Electro Mechanical System-) Antrieb ausgebildet ist. Derartige elektrostatisch, elektromagnetisch oder piezoelektrisch arbeitende MEMS-Positioniersysteme sind bekannt und können mit hoher Genauigkeit und sehr geringem Energieaufwand angesteuert werden.

Um die Inbetriebnahme des Laserspektrometers zu vereinfachen, ist die Steuereinrichtung dazu ausgebildet, den Positionierantrieb in der Weise zu regeln, dass dann, wenn der Detektor kein Licht von der Laserdiode empfängt, in einem ersten Schritt durch Verringerung des Abstandes zwischen der Laserdiode und der Kollimatorlinse das Lichtbündel so lange aufgeweitet wird, bis eine Lichtintensität des von der Laserdiode ausgehenden Lichts detektiert wird. In einem anschließenden Schritt wird dann durch relative Verschiebung der Laserdiode und Kollimatorlinse oder durch Kippen der Kollimatorlinse das Lichtbündel so lange verschwenkt, bis das Lichtbündel optimal auf den Detektor ausgerichtet ist und dementsprechend ein maximaler Wert der Lichtintensität detektiert wird.

Auf dieselbe Weise kann im laufenden Messbetrieb eine automatische Nachjustierung erfolgen, wenn aufgrund einer Dejustierung die Detektion ausfällt.

Um die Intensität des erzeugten Lichts für die Detektion optimal auszunutzen, ist die Steuereinrichtung ferner dazu ausgebildet, nach der Ausrichtung des Lichtbündels auf den Detektor den Positionierantrieb zur Vergrößerung des Abstandes zwischen der Laserdiode und der Kollimatorlinse und damit verbundener Fokussierung des Lichtbündels zu steuern, bis ein neuer Höchstwert der Lichtintensität detektiert wird. Es können sich weitere Schritte anschließen, in denen das Lichtbündel nacheinander fokussiert oder aufgeweitet und ausgerichtet wird, bis eine weitere Erhöhung der von dem Detektor detektierten Lichtintensität nicht mehr möglich ist.

Wie z. B. aus der DE 10 2012 223 874 B3 bekannt ist, wird zur Messung der Konzentration einer Gaskomponente in einem Prozessgas die Wellenlänge der Laserdiode periodisch über eine interessierende Absorptionslinie der Gaskomponente variiert und das detektierte Licht hinsichtlich der Absorption an der Stelle der Absorptionslinie zu dem Analysenergebnis ausgewertet, wobei das Analysenergebnis anhand einer außerhalb der Stelle der Absorptionslinie detektierten Absorption normiert wird. Dies kann, wie im Falle der DE 10 2012 223 874 B3, mittels eines Burstsignals erfolgen, mit dem die Laserdiode angesteuert wird. Aus der DE 102 38 356 A1 ist es bekannt, im Falle der Wellenlängenmodulationsspektroskopie (WMS), bei der während der vergleichsweise langsamen wellenlängenabhängigen Abtastung der Absorptionslinie zusätzlich die Wellenlänge des erzeugten Lichts mit einer Frequenz f sinusförmig moduliert wird, den 2f-Signalanteil in dem von dem Detektor erzeugten Signal zu dem Analysenergebnisses auszuwerten und dabei mit dem 1f-Signalanteil zu normieren.

Aufgrund der Normierung des Analysenergebnisses ist es daher möglich, die detektierbare Lichtintensität auch im laufenden Messbetrieb durch automatisches Nachjustieren der relativen Position von Laserdiode und Kollimatorlinse zu optimieren, wenn entsprechend einer vorteilhaften Weiterbildung des erfindungsgemäßen In-situ-Laserspektrometers der Positionierantrieb mit einer Zeitkonstante geregelt wird, die größer als die Periodendauer der Messung ist. Dabei wird vorzugsweise die von dem Detektor außerhalb der zu messenden Absorptionslinie detektierte und für die Normierung verwendete Lichtintensität benutzt, um das Steuersignal für den Positionierantrieb zu erzeugen.

Im Weiteren wird die Erfindung anhand von Ausführungsbeispielen und unter Bezugnahme auf die Figuren der Zeichnung erläutert; im Einzelnen zeigen
- Figur 1: eine schematische Darstellung eines In-situ-Laserspektrometers,
- Figur 2: ein Blockschaltbild des Laserspektrometers, die
- Figur 3 bis 6: ebenfalls in schematischer Darstellung unterschiedliche Beispiele für die relative gegenseitige Positionierung von Laserdiode und Kollimatorlinse und
- Figur 7: ein Beispiel für die automatische Ausrichtung oder Justierung des Laserspektrometers.

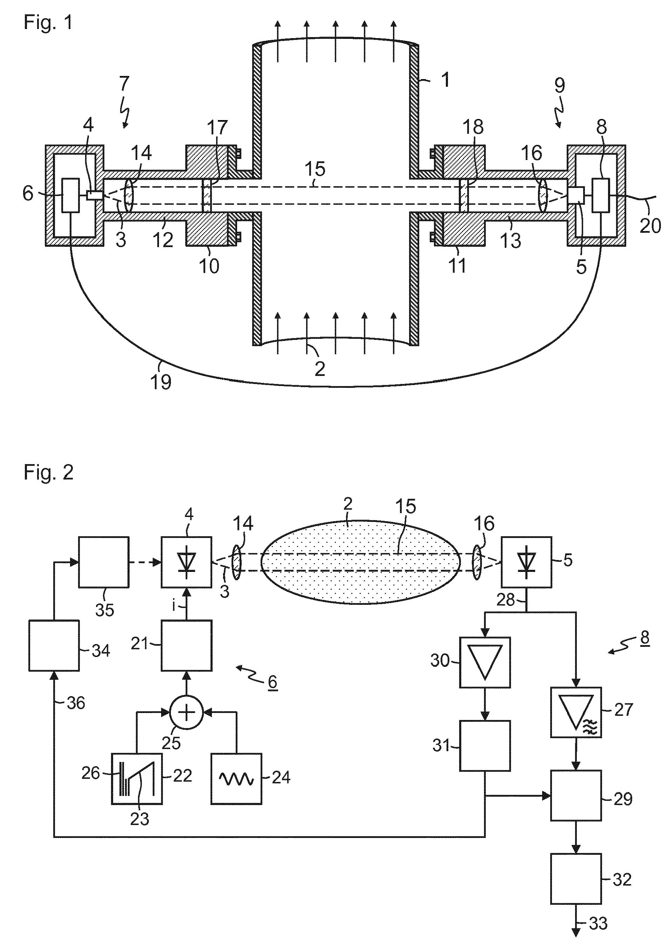

Figur 1 zeigt ein Anlagenteil 1, z. B. ein Abgaskanal oder eine Prozessgasleitung, durch das ein Prozessgas 2 strömt. Um die Konzentration interessierender Gaskomponenten in dem Prozessgas 2 zu messen, wird das Licht 3 einer Laserdiode 4 quer durch das Anlagenteil 1 hindurch auf einen Detektor 5 geleitet. Die Laserdiode 4 ist zusammen mit einer Lasersteuerung 6 in einem ersten Messkopf 7 und der Detektor 5 zusammen mit einer Auswerteinrichtung 8 in einem zweiten Messkopf 9 angeordnet. Die beiden Messköpfe 7 und 9 sind an diametral gegenüberliegenden Stellen mittels Flanschverbindungen 10 und 11 an dem Anlagenteil 1 montiert. Jeder der im Wesentlichen baugleichen Messköpfe 7 und 9 weist eine Längskammer 12 bzw. 13 auf, die an einem Ende in die Prozessgasleitung 1 mündet und am anderen Ende die Laserdiode 4 bzw. den Detektor 5 enthält. Das geringfügig divergente Licht 3 der Laserdiode 4 wird mittels einer Kollimatorlinse 14 zu einem im Wesentlichen parallelen Lichtbündel 15 geformt, das nach Durchstrahlen des Prozessgases 2 mittels einer Fokussierlinse 16 auf den Detektor 5 fokussiert wird. Um das oft aggressive Prozessgas 2 von den Linsen 14 und 16 fernzuhalten, sind die Längskammern 12 und 13 zu dem Anlagenteil 1 hin mit Fenstern 17 und 18 abgeschlossen. Die Bereiche zwischen der Laserdiode 4 bzw. dem Detektor 5 und den Fenstern 17 bzw. 18 können mit einen optisch inaktiven Inertgas gespült werden. Die Lasersteuerung 6 und die Auswerteeinrichtung 8 in den beiden Messköpfen 7 und 9 können über ein Verbindungskabel 19 miteinander kommunizieren. Die Auswerteinrichtung 8 nachgeordnet wertet das von dem Detektor 5 detektierte Licht 3 hinsichtlich der Absorption in dem Prozessgas zu einem Analysenergebnis aus, das über ein Kabel 20 an eine hier nicht gezeigte übergeordnete Einrichtung zur Anzeige und/oder weiteren Auswertung übertragen wird.

Figur 2 zeigt beispielhaft ein Blockschaltbild des Laserspektrometers, das bei dem gezeigten Beispiel nach dem Verfahren der Wellenlängenmodulationsspektroskopie arbeitet. Die Lasersteuerung 6 enthält eine steuerbare Stromquelle 21, die die Laserdiode 4 mit einem Strom i ansteuert. Die Intensität und Wellenlänge des erzeugten Lichts 3 sind von dem Strom i und der Betriebstemperatur der Laserdiode 4 abhängig. Die Stromquelle 21 wird von einem ersten Signalgenerator 22 periodisch mit einer vorgegebenen, vorzugsweise rampenförmigen Strom-Zeit-Funktion 23 angesteuert, um mit dem entsprechend modulierten Licht 3 eine ausgewählte Absorptionslinie einer interessierenden Gaskomponente des Prozessgases 2 wellenlängenabhängig abzutasten. Ein zweiter Signalgenerator 24 erzeugt ein sinusförmiges Signal der Frequenz f, mit dem in einem Summierglied 25 die Strom-Zeit-Funktion 23 moduliert wird. Der erste Signalgenerator 22 erzeugt weiterhin regelmäßig, z. B. in jeder Periode, zwei Burstsignale 26 unterschiedlicher Stromstärke, wobei die Stromstärke jeweils so gewählt ist, dass die resultierende Wellenlänge des Lichts 3 außerhalb der Wellenlängenbereiche der zu messenden Gaskomponente und anderer infrarotaktiver Gaskomponenten des Prozessgases 2 liegt. Beim Durchstrahlen des Prozessgases 2 wird ein geringer Teil des Lichts 3 von den infrarotaktiven Gaskomponenten des Prozessgases 1 wellenlängenabhängig absorbiert. Zusätzlich findet durch die Linsen 14, 16 und Fenster 17, 18 (vgl. Fig. 1) sowie durch Aerosole, z. B. Rauchpartikel, im Prozessgas 2 eine wellenlängenunabhängige Absorption statt.

Die dem Detektor 5 nachgeordnete Auswerteeinrichtung 8 enthält einen frequenzselektiven Verstärker 27, der den 2f-Signalanteil des Detektorsignals 28 verstärkt und einer Normierungsstufe 29 zuführt. In einem weiteren Verstärker 30 werden die aus den Burstsignalen 26 resultierenden Signalanteile des Detektorsignals 28 verstärkt. In einer nachgeordneten Recheneinrichtung 31 wird durch Interpolation zwischen den an den Stellen der Burstsignale 26 mit den unterschiedlichen Stromstärken detektierten Lichtintensitäten ein Intensitätswert an der Wellenlängen-Position der Absorptionslinie der zu messenden Gaskomponente berechnet, der dort bei nicht vorhandener Absorptionslinie gemessen würde. Mit diesem Intensitätswert wird in der Normierungsstufe 29 die an der Stelle der Absorptionslinie in Form des 2f-Signalanteils des Detektorsignals 28 detektierte Lichtintensität normiert. Der so normierte 2f-Signalanteil des Detektorsignals 28 wird in einer nachfolgenden Recheneinrichtung 32 phasensensitiv weiterverarbeitet und zur Ermittlung des Analysenergebnisses 33 in Form der Konzentration der interessierenden Gaskomponente des Prozessgases 2 ausgewertet.

Alternativ kann z. B. auf die Burstsignale 26 verzichtet und stattdessen der Offset in dem 1f-Signalanteil des Detektorsignals 28 zur Normierung des Analysenergebnisses herangezogen werden.

Wie Figur 2 ferner zeigt enthält die Lasersteuerung 6 eine Steuereinrichtung 34 für einen Positionierantrieb 35, der zur relativen gegenseitigen Positionierung von Laserdiode 4 und Kollimatorlinse 14 durch Änderung ihres Abstandes und durch relative Verschiebung von Laserdiode 4 und Kollimatorlinse 14 dient. Die Steuereinrichtung 34 ist dazu ausgebildet, den Positionierantrieb 35 in Abhängigkeit von einem von der Auswerteeinrichtung 8 erzeugten und von der detektierten Lichtintensität, hier der von der Recheneinrichtung 31 an der Wellenlängen-Position der Absorptionslinie der zu messenden Gaskomponente berechneten Lichtintensität, zu steuern.

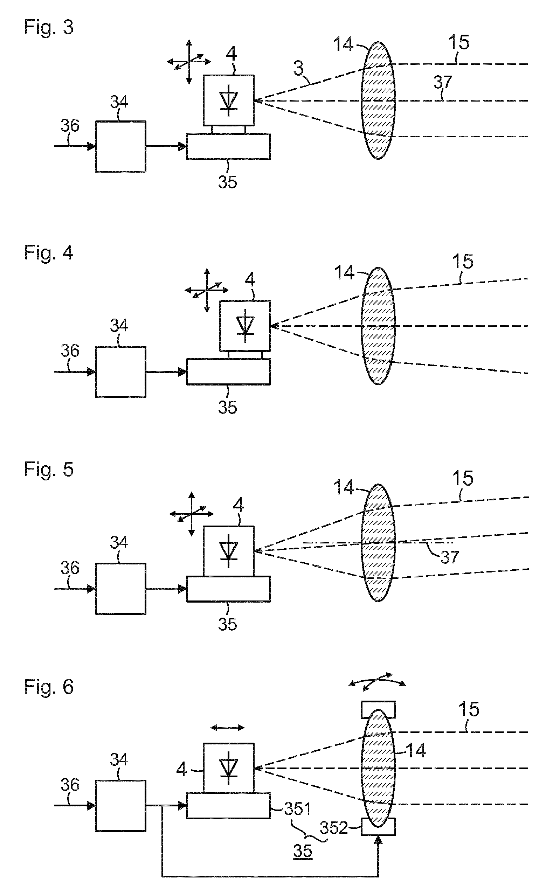

Die Figuren 3 bis 5 zeigen in schematischer Darstellung ein erstes Ausführungsbeispiel für die relative gegenseitige Positionierung von Laserdiode 4 und Kollimatorlinse 14, wobei der Positionierantrieb 35 nur auf die Laserdiode 4 wirkt und diese in drei orthogonale Richtungsachsen positioniert, wobei eine der Richtungsachsen mit der optischen Achse 37 der Kollimatorlinse 14 zusammenfällt. In Figur 3 befindet sich die Laserdiode 4 im Brennpunkt der Kollimatorlinse 14, so dass diese das divergente Licht 3 der Laserdiode 4 zu einem parallelen Lichtbündel 15 formt. In Figur 4 verkürzt der Positionierantrieb 35 den Abstand zwischen der Laserdiode 4 und der Kollimatorlinse 14, so das Lichtbündel 15 aufgeweitet wird. Entsprechend kann durch Vergrößerung des Abstandes zwischen Laserdiode 4 und Kollimatorlinse 14, das Lichtbündel 15 fokussiert werden. In Figur 5 sind die Laserdiode 4 und die Kollimatorlinse 14 orthogonal zur optischen Achse 37 der Kollimatorlinse 14 gegeneinander verschoben, so dass das Lichtbündel 15 in einem Winkel gegenüber der optischen Achse 37 verschwenkt wird.

Bei dem in Figur 6 gezeigten Ausführungsbeispiel ist der Positionierantrieb 35 zweigeteilt, wobei eine Antriebsteil 351 die Laserdiode 4 in Richtung auf die Kollimatorlinse 14 zu oder von dieser weg verschiebt und das andere Antriebsteil 352 die Kollimatorlinse 14 in zwei zueinander senkrechten Kippebenen verschwenkt.

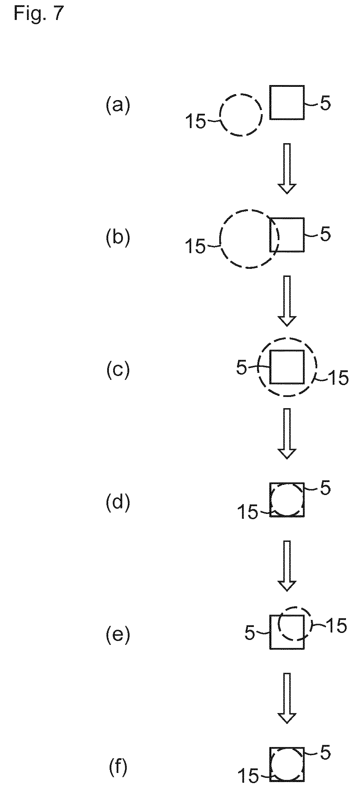

Figur 7 zeigt beispielhaft eine Sequenz für die automatische Ausrichtung bzw. Justierung des Lichtbündels 15, genauer das von der Fokussierlinse 16 erzeugte Abbild des Lichtbündels 15 auf den Detektor 5. Die Sicht erfolgt in Richtung des Lichtbündels 15 auf den Detektor 5.

Bei Fehlausrichtung des Lichtbündels 15 z. B. zu Beginn der Inbetriebnahme des Laserspektrometers trifft das Lichtbündel 15 neben den Detektor 5, der daher keine von der Laserdiode 4 kommende Lichtintensität detektiert (a). Aufgrund der z. B. frequenzselektiven Auswertung kann zwischen dem Licht 3 der Laserdiode 4 und Störstrahlung aus dem Prozess unterschieden werden. In einem ersten Schritt wird das Lichtbündel 15 aufgeweitet, bis der Detektor 5 von der Laserdiode 4 kommendes Licht detektieren kann (b). Anschließend wird das Lichtbündel 15 in eine Richtung verschwenkt. Nimmt dabei die detektierte Lichtintensität ab, so wird das Lichtbündel 15 in eine andere Richtung verschwenkt. Dies erfolgt so lange, bis die detektierte Lichtintensität nicht weiter erhöht werden kann (c). Danach wird das Lichtbündel 15 auf den Detektor 5 fokussiert, bis auch hier keine weitere Verbesserung erreicht wird (d). Wenn während des Messbetriebs aufgrund einer Dejustierung die detektierte Lichtintensität abnimmt (e), wird durch Verschwenken des Lichtbündels 15 automatisch nachjustiert.

## Patentansprüche

1. In-situ-Laserspektrometer zur Analyse eines in einem Anlagenteil (1) geführten Prozessgases (2), mit zwei Messköpfen (7, 9) zur Montage an gegenüberliegenden Stellen des Anlagenteils (1), wobei der eine Messkopf (7) eine Laserdiode (4) und eine Kollimatorlinse (14) enthält, die das divergente Licht (3) der Laserdiode (4) zu einem Lichtbündel (15) formt, um damit das Anlagenteil (1) zu durchstrahlen, und der andere Messkopf (9) einen Detektor (5) enthält, der das Licht (3) detektiert und dem eine Auswerteinrichtung (8) nachgeordnet ist, die das detektierte Licht (3) hinsichtlich der Absorption in dem Prozessgas (2) zu einem Analysenergebnis (33) auswertet, **dadurch gekennzeichnet,**
**dass** der eine Messkopf (7) einen dreidimensional wirkenden Positionierantrieb (35) enthält, der zur relativen gegenseitigen Positionierung von Laserdiode (4) und Kollimatorlinse (14) durch Änderung ihres Abstandes und durch relative Verschiebung von Laserdiode (4) und Kollimatorlinse (14) oder Kippen der Kollimatorlinse (14) ausgebildet ist, und
**dass** eine Steuereinrichtung (34) vorhanden ist, die den Positionierantrieb (35) in Abhängigkeit von einem von der Auswerteeinrichtung (8) erzeugten und von der detektierten Lichtintensität abhängigen Signal (36) steuert.

2. In-situ-Laserspektrometer nach Anspruch 1, **dadurch gekennzeichnet, dass** der Positionierantrieb (35) zur Positionierung der Laserdiode (4) in drei orthogonalen Richtungsachsen ausgebildet ist, wobei eine der Richtungsachsen mit der optischen Achse der Kollimatorlinse (14) zusammenfällt.

3. In-situ-Laserspektrometer nach Anspruch 1 oder 2, **dadurch gekennzeichnet, dass** der Positionierantrieb (35) als MEMS-(Micro Electro Mechanical System-) Antrieb ausgebildet ist.

4. In-situ-Laserspektrometer nach einem der vorangehenden Ansprüche, **dadurch gekennzeichnet, dass** die Steuereinrichtung (34) dazu ausgebildet ist, den Positionierantrieb (35) in der Weise zu regeln, dass bei nicht erfolgender oder ausfallender Detektion der Lichtintensität in einem ersten Schritt durch Verringerung des Abstandes zwischen der Laserdiode (4) und der Kollimatorlinse (14) das Lichtbündel (15) so lange aufgeweitet wird, bis eine Lichtintensität detektiert wird, und dass in einem anschließenden weiteren Schritt durch relative Verschiebung der Laserdiode (4) und Kollimatorlinse (14) oder Kippen der Kollimatorlinse (14) das Lichtbündel (15) so lange verschwenkt wird, bis ein maximaler Wert der Lichtintensität detektiert wird.

5. In-situ-Laserspektrometer nach einem der vorangehenden Ansprüche, **dadurch gekennzeichnet, dass** die Steuereinrichtung (34) dazu ausgebildet ist, den Positionierantrieb (35) in der Weise zu regeln, dass durch abwechselnde Änderung des Abstandes zwischen der Laserdiode (4) und der Kollimatorlinse (14) und relative Verschiebung der Laserdiode (4) und Kollimatorlinse (14) oder Kippen der Kollimatorlinse (14) das Lichtbündel (15) so oft fokussiert oder aufgeweitet und verschwenkt wird, bis ein maximaler Wert der Lichtintensität detektiert wird.

6. In-situ-Laserspektrometer nach Anspruch 5, der dazu ausgebildet ist, zur Messung der Konzentration einer Gaskomponente in einem Prozessgas (2) die Wellenlänge der Laserdiode (4) periodisch über eine interessierende Absorptionslinie der Gaskomponente zu variieren und das detektierte Licht (3) hinsichtlich der Absorption an der Stelle der Absorptionslinie zu dem Analysenergebnis (33) auszuwerten und dabei das Analysenergebnis (33) anhand einer außerhalb der Stelle der Absorptionslinie detektierten Lichtintensität zu normieren, wobei die Steuereinrichtung (34) dazu ausgebildet ist, den Positionierantrieb (35) während der Messung zur Maximierung der detektierten Lichtintensität zu regeln, wobei die Zeitkonstante der Regelung größer als die Periodendauer der Messung ist.

7. In-situ-Laserspektrometer nach Anspruch 6, **dadurch gekennzeichnet, dass** die Auswerteeinrichtung (8) dazu ausgebildet ist, das Signal (36) zur Steuerung des Positionierantriebs (35) in Abhängigkeit von der außerhalb der Stelle der Absorptionslinie detektierten Lichtintensität zu erzeugen.
